# EUROPÄISCHE PATENTSCHRIFT

(11) **EP 1 631 622 B1**
(45) Veröffentlichungstag und Bekanntmachung des Hinweises auf die Patenterteilung: **01.02.2017**
(21) Anmeldenummer: 04732973.5
(22) Anmeldetag: 14.05.2004
(51) Int. Cl.: C08L 77/00

(54) **POLYAMID-FORMMASSEN**
POLYAMIDE MOLDING MATERIALS
MATIERES A MOULER A BASE DE POLYAMIDE

(30) Priorität: 27.05.2003 DE 10324324
(43) Veröffentlichungstag der Anmeldung: 08.03.2006
(73) Patentinhaber: LANXESS Deutschland GmbH, 50569 Köln (DE)
(72) Erfinder: ULRICH, Ralph, 40882 Ratingen (DE); JOACHIMI, Detlev, 47800 Krefeld (DE)
(86) Internationale Anmeldenummer: PCT/EP2004/005221
(87) Internationale Veröffentlichungsnummer: WO 2004/106433

(56) Entgegenhaltungen:
- EP-A- 0 568 994
- EP-A- 0 802 268
- EP-A- 1 065 312
- DE-A- 1 595 613
- DATABASE WPI Section Ch, Week 200326 Derwent Publications Ltd., London, GB; Class A14, AN 2003-260298 XP002291686 & JP 2002 306059 A (null) 22. Oktober 2002 (2002-10-22) in der Anmeldung erwähnt
- DATABASE WPI Section Ch, Week 199532 Derwent Publications Ltd., London, GB; Class A14, AN 1995-244071 XP002291687 & JP 07 150414 A (TORAY IND INC) 13. Juni 1995 (1995-06-13)

## Beschreibung

Die vorliegende Erfindung betrifft Polyamidformmassen enthaltend Polyamid, kristallisationsverzögernde Additive und Lösungsmittel.

Polyamide zeichnen sich durch eine Vielzahl vorteilhafter Eigenschaften wie z.B.. hohe Zähigkeit, hohe Temperaturfestigkeit u.a. aus, die ihnen im Bereich der technischen Thermoplaste einen festen Platz im Markt sichern. Diese Basiseigenschaften des Polymeren werden im Allgemeinen durch die Zugabe von Zusatzstoffen oder Additiven modifiziert. Polymeres und Additive zusammen ergeben die sogenannte Formmasse. Polyamidformmassen kommen in vielen Anwendungen zum Einsatz. Beispielhaft genannt seien Spritzgussteile z.B. für den Automobilmarkt oder Extrudate wie Folien oder Hohlkörper für den Verpackungsbereich.

Folien und Hohlkörper, die eine Polyamidschicht enthalten, zeichnen sich durch eine Vielzahl vorteilhafter Eigenschaften aus. Zu nennen sind insbesondere gute optische Eigenschaften wie hohe Transparenz von Folien bzw. Hohlkörper mit hohem Oberflächenglanz. Außerdem von Bedeutung sind die guten mechanischen Eigenschaften wie hohe Zähigkeit, hohe Durchstoßfestigkeit, hohe Weiterreißfestigkeit und andere. Hinzu kommt eine einfache Herstellbarkeit und einfache Weiterverarbeitbarkeit.

Von besonderer Bedeutung für viele Einsatzgebiete für Folien und Formmassen, insbesondere für den Einsatz im Verpackungssektor z.B. für Lebensmittel oder Kosmetika ist eine Steuerung der Kristallisationsgeschwindigkeit des eingesetzten Materials um Eigenschaften wie z.B. Schrumpf oder Schlagzähigkeit gezielt zu beeinflussen.

Im Bereich der Verwendung von Polyamid in der Herstellung von Folien muss grundsätzlich zwischen dem Prozess der Flachfolienherstellung sowie der Blasfolienherstellung unterschieden werden.

Besonders im Bereich der Anwendung im Blasfoliensektor sind Polyamide notwendig, die langsamer kristallisieren als übliches Polyamid 6, um ein Aufblasen und Verstrecken des Primärschlauchs im Prozess der Blasfolienherstellung zu ermöglichen, bevor die Folien einen zu hohen Kristallisationsgrad erreicht hat.

Dieses Ziel wird derzeit durch den Einsatz von Copolyamiden erreicht. Das verbreiteste Copolyamid in der Blasfolienextrusion ist ein Copolyamid aus Polyamid 6 und Polyamid 66, das üblicherweise zwischen 15 Gew.-% und 20 Gew.-% Polyamid 66 enthält.

Aber auch andere Copolyamide mit verzögerter Kristallisation sind beschrieben (z.B. EP-A 561 226). Hier werden Copolyamide aus Caprolactam, Isophthalsäure und Hexamethylendiamin mit reduzierter Kristallinität gegenüber herkömmliche Polyamiden beschrieben. Durch die reduzierte Kristallinität nach der Verarbeitung wird eine erhöhte Transparenz der beanspruchten Mehrschichtfolie erreicht.

Solche Copolyamide werden üblicherweise nicht über den für Polyamid 6 weit verbreiteten VK-Rohr Prozess (VK d.h. voll kontinuierlich) hergestellt, sondern über spezielle Prozesse, wie in EP-A 98 412, EP-A 393 546 oder WO-A 9421711 beschrieben.

Es ist bekannt, dass durch Einpolymerisation oder Eincompoundierung von Poly-N-vinylpyrrolidonen die Transparenz von Polyamiden verbessert werden kann (DE-A 1 595 613).

Die japanische Patentanmeldung JP-A 2002306059 beschreibt die Coextrusion eines Blends aus 96 % Polyamide 6-Polyamid 66 Copolymer mit 4 % eines vernetzten N-Vinylpyrrolidons zur Herstellung von Verpackungen für Lebensmittel mit moderater Wasserdampfdurchlässigkeit und guter Sauerstoffbarriere.

JP-A-7150414 beschreibt Fasern aus Polyamid und 1 Gew.-% Polyvinylpyrrolidon.

EP-A-1065312 offenbart einen Filz aus Polyamid-6 und 3 Gew.-% Polyvinylpyrrolidon.

EP-A-0568994 offenbart eine Mischung aus 99 Gew.-% Polyamid und 1 Gew.-% Polyvinylphenol. Der Zusatz des Polyvinylphenols dient dazu, die Kristallisation des Polyamids zu verlangsamen.

Weit verbreitet ist auch die Verwendung von Poly-N-vinyllactam oder Poly-N-vinylpyrrolidonen im Bereich der Faserherstellung. Hierbei werden z.B. zur Erhöhung der Hydrophilie 3 Gew-.% bis 15 Gew-.% der genannten Verbindungen durch Compoundierung eingearbeitet. Ein hoher Anteil an Poly-N-vinyllactam oder Poly-N-virtylpyrrolidon wirkt sich allerdings negativ auf den Gelbwert aus (EP-A 0 802 268).

Im Bereich compoundierter Produkte wird zur Verlangsamung der Kristallisation üblicherweise Nigrosinbase verwendet, die allerdings zu einer Schwarz-Verfärbung des Produktes führt.

Für Anwendungen wie das Laserdurchstrahlschweißen von Polyamidformteilen werden Materialien mit möglichst geringer Kristallinität benötigt, da die Transmission für Laserlicht mit zunehmender Kristallinität sinkt. Grundlegende Prinzipien des Laserdurchstrahlschweißens sind in der Fachliteratur beschrieben (Kunststoffe 87 (1997) 3, 348-350; Kunststoffe 88 (1998) 2, 210-212; Kunststoffe 87 (1997) 11, 1632-1640; Plastverarbeiter 50 (1999) 4, 18-19; Plastverarbeiter 46 (1995) 9, 42-46).

Voraussetzung für die Anwendung des Laserstrahlschweißens ist, dass die vom Laser emittierte Strahlung zunächst einen Fügepartner, der für Laserlicht der eingesetzten Wellenlänge ausreichend transparent ist, durchdringt, und dann vom zweiten Fügepartner in einer dünnen Schicht von einigen 100 µm absorbiert und in Wärme umgewandelt wird, die zum Aufschmelzen in der Kontaktzone und letzlich zur Verbindung beider Fügepartner durch eine Schweißnaht führt.

Im Bereich der Wellenlänge der für das Thermoplastschweißen üblicherweise eingesetzten Laser (Nd:YAG-Laser:1060 nm; Hochleistungsdiodenlaser: 800-1000 nm) sind teilkristalline Thermoplaste wie Polyamide, z.B. Polyamid 6 (PA6) und Polyamid 66 (PA66) zwar transparent bzw. lasertransluzent, die Transmission ist aber für gute Verschweißbarkeit häufig nicht ausreichend, so dass Modifizierungen zu höherer Transmission benötigt werden. Die Nigrosinbase verringert zwar die Kristallinität, weist aber im für Laserdurchstrahlschweißen interessanten Frequenzbereich von 800 - 1100 nm starke Eigenabsorptionen auf. Die erfindungsgemäße Aufgabe bestand demnach darin, eine Formulierung zu entwickeln, die eine Kristallisationsverzögerung von Polyamid, bevorzugt Polyamid 6 ermöglicht, wobei keine unerwünschte Verfärbung auftritt.

Überraschenderweise wurde jetzt gefunden, dass mittels Zusatz von Vinylhomopolymeren und/oder Copolymere aus Vinylmonomere und bevorzugt einem Lösungsmittel zum Polyamid diese Aufgabe gelöst werden konnte.

Es kann bevorzugt mit

Paly-N-vinyllactam und Poly-N-vinylpyrrolidon sowie Copolymeren bestehend aus Vinyllactam, und/oder Vinylpyrrolidon und weiteren Vinylmonomeren wie z.B. Vinylacetat und/oder Vinylimidazol und/oder quaternisiertes Vinylimidazol und/oder Vinylacrylat und/oder Methacrylate wie z.B. Methylmethacrylat, Natrium-methacrylat oder Cyclohexylmethacrylat und/oder Acrylamid und/oder Acrylnitril und/oder N-Vinylcarbazol und/oder Styrole, wie z.B. p-Aminostyrol bei guter Verteilung in der Polymermatrix eine Kristallisationsverzögerung erreicht werden. Für diese Homogenisierung kann erfindungsgemäß ein Lösungsmittel für die Homopolymere bzw. Copolymere vorteilhaft sein.

Gegenstand der Erfindung sind daher Formmassen enthaltend

A) 95-99,994, bevorzugt 99-99,965 Gew.-% Polyamid und B) 0,005-1, bevorzugt 0,005-0,8 Gew.-% Vinylhomopolymere und/oder Copolymere aus Vinylmonomeren und C) 0,001-1, bevorzugt 0,03-0,4 Gew.-% Lösungsmittel, wobei das Lösungsmittel ausgewählt ist aus Wasser, Alkohol, Keton, Eisessig, Chlorkohlenwasserstoff und Phenol sowie faserförmige Verstärkungsstoffe, wobei als solche neben Glasfasern, Aramidfasern, Mineralfasern und Whisker in Betracht kommen.

Bevorzugte B) Vinylhomopolymere und/ oder Copolymere aus Vinylmonomeren sind Poly-N-vinyllactam und/oder Poly-N-vinylpyrrolidon sowie Copolymeren bestehend aus Vinyllactam, und/oder Vinylpyrrolidon und weiteren Vinylmonomeren wie z.B. Vinylacetat und/oder Vinylimidazol und/oder quaternisienes Vinylimidazol und/oder Vinylacrylat und/oder Methacrylate wie z.B. Methylmethactylat, Natrium-methactylat oder Cyclohexylmethacrylat und/oder Acrylamid und/oder Acrylnitril und/oder N-Vinylcarbazol und/oder Styrole, wie z.B. p-Aminostyrol.

B: Bevorzugt sind Mengen von 50 - 8000 ppm bezogen auf die gesamte Zusammensetzung.

Als Lösungsmittel C sind bevorzugt Polyethylengykole mit einem Molekulargewicht zwischen 100 g/mol und 2.000 g/mol, ganz besonders bevorzugt sind Polyethylengykole mit einem mittleren Molekulargewicht zwischen 200 g/mol und 600 g/mol.

Lösungsmittel C: Bevorzugt sind Mengen von 300 - 4000 ppm bezogen auf die gesamte Zusammensetzung.

Bevorzugt ist im Falle von Konzentrationen von B kleiner 5.000 ppm ein C) Lösungsmittel für Poly-N-vinyllactam oder Poly-N-vinylpyrrolidon, wobei das Poly-N-vinyllactam oder Poly-N-vinylpyrrolidon in Lösung direkt auf das Granulat aufgebracht werden kann.

Außerdem können die Formmassen im Falle von Formmassen für Spritzgussverarbeitung oder Extrusion (Profile, Blasformteile) Additive und Farbmittel enthalten.

Gegenstand der Erfindung ist ferner ein Verfahren zur Herstellung der Formmassen indem die Komponenten A), B), C) in beliebiger Reihenfolge vermischt werden.

Gegenstand ist bevorzugt ein Verfahren, wobei die Komponenten B) und C) zuerst miteinander vermischt und dann zur Komponente A) gegeben werden.

Gegenstand der Erfindung ist die Verwendung der Formmassen zur Herstellung von Folien, Formkörpern und Hohlkörpern.

Gegenstand der Erfindung sind weiterhin bevorzugt ein- oder mehrschichtige Folien oder Hohlkörper enthaltend mindestens eine Schicht der erfindungsgemäßen Formmasse.

Gegenstand der Erfindung ist außerdem die Verwendung der Folien als Verpackungsmaterial.

Gegenstand der Erfindung ist außerdem die Verwendung der Hohlkörper als Leitungen, und Tanks.

Gegenstand der Erfindung sind außerdem durch Laserdurchstrahlschweißen miteinander verbundene Formteile, bei denen mindestens das der Laserquelle zugewandte Teil aus einem erfindungsgemäßen Polyamid besteht.

Bevorzugt, besonders bevorzugt oder ganz besonders bevorzugt sind Ausführungsformen, welche von den unter bevorzugt, besonders bevorzugt oder ganz besonders bevorzugt genannten Parametern, Verbindungen, Definitionen und Erläuterungen Gebrauch machen.

Die oben aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen kombiniert werden.

Bei dem Polyamid, das in der Polyamidschicht der erfindungsgemäßen Formmassen, Folien oder Hohlkörper enthalten ist, handelt es sich um ein bekanntes aliphatisches oder aromatisches oder teilaromatisches Homopolyamid oder Copolyamid oder um eine Mischung aus mehreren Polyamiden. Bevorzugt eingesetzt werden beispielsweise und unabhängig voneinander PA6, PA66, PA 11, PA12, PA 46, PA610, Polyamid 6, Polyamid 10, Polyamid 12, Polyamid 66, Polyamid 610, Polyamid 61, Polyamid 612, Polyamid 6/66, Polyamid 6I/6T, Polyamid MXD6, Polyamid 6/6I, Polyamid 6/6T, Polyamide 6/IPDI und Copolymeren sowie Polymermischungen dieser Gruppen.

Besonders bevorzugt eingesetzt wird PA 6 oder PA 66 oder ein Copolyamid aus Caprolactameinheiten und Einheiten abgeleitet von Hexamethylendiamin und Isophthalsäure oder Hexamethylendiamin und Terephthalsäure oder Hexamethylendiamin und Adipinsäure. Einheiten die man aus Hexamethylendiamin und Isophthalsäure oder aus Hexamethylendiamin und Terephthalsäure oder aus Hexamethylendiamin und Adipinsäure erhält werden erfindungsgemäß als Copolyamid-Anteile bezeichnet. Bevorzugt sind Copolyamid Anteile von 0-50 Gew.-%, besonders bevorzugt sind Copolyamid Anteile zwischen 0-25 Gew.-%, ganz besonders bevorzugt sind 0-15 Gew.-% bezogen auf A. Ganz besonders bevorzugt sind Formmassen, wobei als A) Polyamid 6 eingesetzt wird.

Die erfindungsgemäße Modifizierung der Polyamide erfolgt vorzugsweise mit Poly-N-vinyllactam und Poly-N-vinylpyrrolidonen mit einem Gewichtsmittel des Molekulargewichts von 20.000 g/mol bis 2.000.000 g/mol besonders bevorzugt sind Polyvinylpyrrolidone mit einem Molekulargewicht zwischen 50.000 g/mol und 1.500.000 g/mol und ganz besonders bevorzugt Polyvinylpyrrolidone mit einem Molekulargewicht von ca. 1.300,000 g/mol.

Als Lösungsmittel für Poly-N-vinyllactam und Poly-N-vinylpyrrolidon eignen sich Wasser, Alkohole wie z.B. Polyethylenglykole, Ketone, Eisessig, Chlorkohlenwasserstoffe und Phenole.

Besonders bevorzugt sind Polyethylenglykole mit einem Molekulargewicht zwischen 100 g/mol und 2.000 g/mol, ganz besonders bevorzugt sind Polyethylenglykole mit einem Molekulargewicht zwischen 200 g/mol und 600 g/mol.

Die erfindungsgemäßen Folien oder Hohlkörper können aus nur einer Polyamidschicht bestehen oder einen mehrschichtigen Aufbau aufweisen. Im Falle des mehrschichtigen Aufbaus können die weiteren Schichten z.B. aus Polyolefinen wie z.B. Polyethylen oder Polyethylencopolymeren wie z.B. Copolymeren aus Ethylen und Acrylsäure oder Methacrylsäure oder Barrierepolymeren wie z.B. Polyvinylidenchlorid oder Copolymeren aus Ethylen und Vinylalkohol oder aus weiteren Polyamidschichten bestehen.

Die erfindungsgemäßen Formmassen, Folien, Hohlkörper, Profile oder Spritzgussformteile werden in bekannter Weise z.B. durch Extrusion, Coextrusion, Beschichten, Kaschieren, Blasformen oder Spritzgießverfahren hergestellt. Im Falle der Folien kann die Extrusion oder Coextrusion z.B. nach dem sogenannten Chill-roll-Verfahren oder nach dem Blasextrusionsverfahren bzw. Blascoextrusionsverfahren erfolgen. Bei mehrschichtigen Folien oder Hohlkörpern können die handelsüblichen Haftvermittler eingesetzt werden.

Die Ausgangspolyamide für die erfindungsgemäßen Polyamid-Formmassen können in einem kontinuierlichen oder in einem diskontinuierlichen Verfahren in bekannter Weise hergestellt werden. Bei einem diskontinuierlichen Verfahren kann es sich z.B. um die Polymerisation in einem Autoklaven handeln. Bei einem kontinuierlichen Verfahren kann es sich z.B. um die Polymerisation in einem sogenannten VK-Rohr handeln. Bevorzugt erfolgt die Herstellung nach einem kontinuierlichen Verfahren. Zur Erreichung hoher Molmassen, wie sie für die Anwendung als Folienmaterial häufig erforderlich sind, kann der Polymerisation in Schmelze eine Nachkondensation in fester Phase nachgeschaltet sein. Die Zugabe der Poly-N-vinyllactam oder Poly-N-vinylpyrrolidone erfolgt in Form einer homogenen Lösung nach dem letzten viskositätsaufbauendem Verfahrensschritt direkt auf das Granulat.

Alternativ ist insbesondere bei der Herstellung von Compounds die Zugabe als Feststoff oder Flüssigkeit oder Lösung während der Compoundierung z.B. auf einem Zweiwellenextruder oder Kneter möglich. Als weitere Alternative ist die Zugabe des Poly-N-vinyllactam oder der Poly-N-vinylpyrrolidone in reiner Form oder als homogene Lösung direkt vor der Verarbeitung entsprechender Compounds auf einer Spritzgießmaschine möglich.

Die erfindungsgemäßen Formmassen, Folien, Hohlkörper, Profile oder Spritzgussformteile können vor ihrem letztendlichen Einsatzzweck weiter bearbeitet oder umgeformt werden. So können die erfindungsgemäßen Folien z.B. tiefgezogen werden. Die erfindungsgemäßen Folien oder Hohlkörper können z.B. zu Verpackungszwecken eingesetzt werden. Erfindungsgemäße Folien oder Hohlkörper können z.B. zur Verpackung von Lebensmitteln, wie Fleisch und Fleischprodukten, Wurst, Käse, Getränke u.a. verwendet werden. Die erfindungsgemäßen Folien oder Hohlkörper können z.B. auch zur Verpackung von Kosmetika wie z.B. Sonnenschutzcremes oder Chemikalien wie z.B. Pflanzenschutzmittel verwendet werden. Des weiteren können die erfindungsgemäßen Hohlkörper als Leitungen oder Tanks dienen. Dabei kann es sich z.B. um Leitungen oder Tanks für Kraftstoffe oder Öle für Automobile handeln.

Laserdurchstrahlgeschweißte Spritzgussformteile können z.B. als Gehäuse für elektrische Bauteile und/oder Sensoren eingesetzt werden.

Die hier gefundene deutliche Verzögerung der Kristallisation wird erreicht durch den Zusatz von Poly-N-vinyllactam oder Poly-N-vinylpyrrolidon oder Copolymeren bestehend aus Vinyllactam, und/oder Vinylpyrrolidon sowie weiteren Vinylmonomeren wie z.B. Vinylacetat und/oder Vinylimidazol und/oder quaternisiertes Vinylimidazol und/oder Vinylacrylat und/oder Methacrylate wie z.B. Methylmethacrylat, Natrium-methacrylat oder Cyclohexylmethacrylat und/oder Acrylamid und/oder Acrylnitril und/oder N-Vinylcarbazol und/oder Styrole, wie z.B. p-Aminostyrol bzw. einer homogenen Lösung von Poly-N-vinyllactam oder Poly-N-vinylpyrrolidon oder Copolymeren bestehend aus Vinyllactam, und/oder Vinylpyrrolidon sowie weiteren Vinylmonomeren wie z.B. Vinylacetat und/oder Vinylimidazol und/oder quaternisiertes Vinylimidazol und/oder Vinylacrylat und/oder Methacrylate wie z.B. Methylmethacrylat, Natrium-methacrylat oder Cyclohexylmethacrylat und/oder Acrylamid und/oder Acrylnitril und/oder N-Vinylcarbazol und/oder Styrole, wie z.B. p-Aminostyrol.

Überraschenderweise tritt die Wirkung der erfindungsgemäßen Lösung von Poly-N-vinyllactam oder Poly-N-vinylpyrrolidonen bereits bei Zumischungen von <500 ppm auf. Die homogene Verteilung macht eine Extrusion zu Folien erst möglich, da nur so eine erhöhte Stippenbildung vermieden werden kann.

Die erfindungsgemäßen Polyamide können im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden. Geeignet sind auch Blends mit Anteilen von anderen Polymeren z.B. von Polyethylen, Polypropylen, ABS. Die Eigenschaften der Polyamide lassen sich durch Zusatz von Elastomeren verbessern, z.B. im Hinblick auf die Schlagzähigkeit von z.B. verstärkten Polyamiden. Die Vielzahl der Kombinationsmöglichkeiten ermöglicht eine sehr große Zahl von Produkten mit unterschiedlichsten Eigenschaften.

Die erfindungsgemäß hergestellten Polyamide können auch im Gemisch mit anderen Polyamiden und/oder weiteren Polymeren eingesetzt werden.

Zusätzlich können die Polyamidformmassen noch Brandschutzmittel wie z.B. Phosphorverbindungen, organische Halogenverbindungen, Stickstoffverbindungen und/oder Magnesiumhydroxid, Stabilisatoren, Verarbeitungshilfsmittel wie z.B. Gleitmittel, Nukleierungsmittel, Stabilisatoren, Schlagzähmodifikatoren wie z.B. Kautschuke oder Polyolefine u.ä. enthalten.

Als faserförmige Verstärkungsstoffe neben Glasfasern kommen Aramidfasern, Mineralfasern und Whisker in Betracht. Als geeignete mineralische Füllstoffe seien beispielhaft Kalziumcarbonat, Dolomit, Kalziumsulfat, Glimmer, Fluorglimmer, Wollastonit, Talkum und Kaolin genannt. Zur Verbesserung der mechanischen Eigenschaften können die faserförmigen Verstärkungsstoffe und die mineralischen Füllstoffe oberflächenbehandelt sein.

Die Zugabe der Füllstoffe kann vor, während oder nach der Polymerisation der Monomere zum Polyamid erfolgen. Erfolgt die Zugabe der erfindungsgemäßen Füllstoffe nach der Polymerisation, so erfolgt sie vorzugsweise durch Zugabe zur Polyamidschmelze in einem Extruder. Erfolgt die Zugabe der erfindungsgemäßen Füllstoffe vor oder während der Polymerisation, so kann die Polymerisation Phasen umfassen, in denen in Gegenwart von 1 bis 50 Gewichtsprozent Wasser gearbeitet wird.

Die Füllstoffe können bei der Zugabe schon als Partikel mit der letztendlich in der Formmasse auftretenden Partikelgröße vorliegen. Alternativ können die Füllstoffe in Form von Vorstufen zugegeben werden, aus denen die letztendlich in der Formmasse auftretenden Partikel erst im Laufe der Zugabe bzw. Einarbeitung entstehen.

Als Brand- oder Flammschutzmittel kommen beispielsweise roter Phosphor (DE-A-3 713 746 A1 (= US-A-4 877 823) und EP-A-299 444 (= US-A-5 081 222), bromierte Diphenyle oder Diphenylether in Kombination mit Antimontrioxid und chlorierte cycloaliphatische Kohlenwasserstoffe (Dechlorane^{®} plus von Occidental Chemical Co.), bromierte Styrol-Oligomere (z.B. in DE-A-2 703 419) und kernbromierte Polystyrole (z.B. Pyro-Chek 68^{®} von FERRO Chemicals) in Frage.

Als Synergist zu den genannten Halogenverbindungen werden z.B. Zinkverbindungen oder Eisenoxide eingesetzt.

Als weitere Alternative haben sich vor allem Melaminsalze als Flammschutzmittel besonders für unverstärkte Polyamide bewährt.

Darüber hinaus hat sich Magnesiumhydroxid als Flammschutzmittel für Polyamid seit langem bewährt.

Die Polyamid-Formmassen können neben Glasfasern zusätzlich kautschukelastische Polymerisate enthalten (oft auch als Schlagzähmodifikator, Elastomer oder Kautschuk bezeichnet).

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Als Keimbildungsmittel können z.B. Natriumphenylphosphinat, Aluminiumoxid, Siliziumdioxid sowie bevorzugt Talkum eingesetzt werden.

Gleit- und Entformungsmittel, welche üblicherweise in Mengen bis zu 1 Gew.-% eingesetzt werden, sind bevorzugt Esterwachse, Pentaeryrhritstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, und N-(n-Butyl)benzolsulfonamid genannt.

Besonders bevorzugt ist der zusätzliche Einsatz von kautschukelastischen Polymerisaten (oft auch als Schlagzähmodifikator, Elastomer oder Kautschuk bezeichnet).

Ganz allgemein handelt es sich dabei um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag), Stuttgart, 1961), Seiten 392 bis 406 und in der Monographie von C.B. Bucknall, "Toughened Plastics" (Applied Science Publishers, London, 1977) beschrieben.

Selbstverständlich können auch Mischungen von Kautschuktypen eingesetzt werden.

Als Farbmittel eignen sich sowohl organische als auch anorganische Pigmente und/oder Farbstoffe. Ruß ist gegebenenfalls in sehr geringen Mengen Bestandteil der Pigment-mischung. Die Pigmente/ Farbstoffe und/oder Ruße können gegebenenfalls auch als Batch eingesetzt werden.

Beispiele für anorganische Pigmente sind Antimontrioxid, Antimonpentoxid, basisches Bleicarbonat, basisches Bleisulfat oder Bleisilikat, Lithopone, Titandioxid (Anatas, Rutil), Zinkoxid, Zinksulfid, Metalloxide wie Berlinerblau, Bleichromat, Bleisulfochromate, Chrom-antimon-titanat, Chromoxide, Eisenoxide, Kobaltblau, Kobaltchromblau, Kobaltnickelgrau, Manganblau, Manganviolett, Molybdatorange, Molybdatrot, Nickel-antimontitanat, Ultramarinblau, sowie Metallsulfide wie Antimontrisulfid, Cadmiumsulfid, Cadmiumsulfoselenide, Zirkonsilikate, Zirkonvanadiumblau, Zirkonpraseodymgelb.

Beispiele für organische Pigmente sind Antrachinon-, Azo-, Azomethin-, Benzanthron-, Chinacridon-, Chinophthalon-, Dioxazin-, Flavanthron-, Indanthron-, Isoindolin, Isoindolinon-, Methin-, Perinon-, Perylen-, Phthalocyanin-, Pyranthron-, Pyrrolopyrrol-, Thioindigopigmente sowie Metallkomplexe von z.B. Azo-, Azomethin-, Methinfarbstoffen oder Metallsalzen von Azoverbindungen.

Als polymerlösliche Farbstoffe eignen sich beispielsweise Dispersionsfarbstoffe, wie solche der Anthrachinonreihe, beispielsweise Alkylamino-, Amino-, Arylamino-, Cyclohexylamino-, Hydroxy-, Hydroxyamino- oder Phenylmercaptoanthrachinone, sowie Metall-komplexe von Azofarbstoffen, insbesondere 1:2-Chrom- oder Kobaltkomplexe von Monoazofarbstoffen, sowie Fluoreszenzfarbstoffe, zum Beispiel solche aus der Benzthiazol-, Cumarin-, Oxarin-, oder Thiazinreihe.

Die polymerlöslichen Farbstoffe können auch in Kombinationen mit Füllern und/ oder Pigmenten, insbesondere mit anorganischen Pigmenten wie Titandioxid eingesetzt werden.

Es können Pigmente und/oder polymerlösliche Farbstoffe verwendet werden. Die verwendeten Farbstoffe oder Pigmente dürfen im Falle der Einfärbung von Formmassen, die lasertransluzent sein sollen selbstverständlich im NIR-Spektralbereich keine oder nur eine sehr geringe Absorption aufweisen und sollten mit den erfindungsgemäß verwendeten thermoplastischen Polymeren verträglich sein und deren mechanischen oder sonstigen Eigenschaften nicht wesentlich beeinträchtigen.

Geeignete Pigmentzusätze sind beispielsweise Fettsäuren mit mindestens 12 C-Atomen, wie Behensäure oder Stearinsäure, deren Amide, Salze oder Ester, wie Aluminiumstearat, Magnesiumstearat, Zinkstearat, oder Magnesiumbehenat, sowie quartäre Ammonium-verbindungen, wie Tri-(C₁-C₄)-alkylbenzylammoniumsalze, Wachse, wie Polyethylenwachs, Harzsäuren, wie Abietinsäure, Kolophoniumseife, hydriertes oder dimeriesiertes Kolophonium, C₁₂-C₁₈-Paraffindisulfonsäuren oder Alkylphenole.

Bevorzugt sind Farbstoffe vom Pyrazolon-, Perinon- und Anthrachinontyp, weiterhin vom Methin-, Azo- und Cumarin-Typ.

Ebenfalls bevorzugt sind die metallhaltigen Pigmente, wie die anorganischen Pigmente und die Metallkomplexe von Azo-, Azomethin- oder Methinfarbstoffen, Azomethin-, Chinacridon-, Dioxazin-, Isoindolin-, Isoindolinon-, Perylen-, Phthalocyanin-, Pyrrolopyrrol- und Thioindigo-Farbmittel und Wismut-Vanadat.

### Beispiele:

### Prüfmethoden:

Die isotherme Kristallisationszeit wurde mittels Differentialkalorimetrie gemessen.

Die Messung des Folienindexes erfolgt durch ein optisches Auswertesystem. Granulat wird hier zu einer Folien extrudiert und Fehlstellen in der Folie entsprechend ihrer Größe detektiert. Der Folienindex ist eine aus der Zahl und Größe der Fehlstellen errechnete Größe, in die die Fehlstellen entsprechend ihrer Größe gewichtet einfließen.

### Durchführung und Ergebnisse der Lasertransmissionsmessungen

Die Musterplatten aus dem IR-Laser-absorbierenden und dem IR-Laser-transparenten Material wurden beide mit einer Transmissionsmessanordnung, bestehend aus einem Spektralphotometer und einer Photometerkugel, vermessen, die sowohl direkt transmittiertes Licht als auch gestreutes Licht erfasst. Für IR-Laser-transparentes Material weist bei Schichtdicken zwischen 1 und 3 mm ein Transmissionsniveau von typischerweise 20 - 70 % auf.

### Verwendete Materialien

Durethan^{®} B40 FA, kommerziell erhältliches Polyamid der Fa. Bayer AG
Durethan^{®} B40 F, kommerziell erhältliches Polyamid 6 der Fa. Bayer AG
Durethan^{®} B 38 FKA, kommerziell erhältliches Polyamid 6 der Fa. Bayer AG
Durethan^{®} B 30 F, kommerziell erhältliches Polyamid 6 der Fa. Bayer AG
PEG 400 (Polyethylenglykol 400) [25322-68-3] kommerziell erhältlich bei Aldrich
Lusviskol K25 (Polyvinylpyrrolidone K25) [9003-39-8], kommerziell erhältliches Produkt der Fa. Aldrich
Lusviskol K30 (Polyvinylpyrrolidone K30) [9003-39-8], kommerziell erhältliches Produkt der Fa. Aldrich
Mistron Vapor RP6 kommerziell erhältliches Talkum der Firma Luzenac
Lusviskol K90 (Polyvinylpyrrolidone K90), kommerziell erhältliches Produkt der Fa. BASF AG
Glasfaser CS 7928, kommerziell erhältliche Schnittglasfaser der Fa. Bayer AG
Alle %, ppm Angaben sind Gewichtsbezogen auf Gesamtzusammensetzung.

### (Vergleielisbeispiel 7)

6 kg eines kommerziell erhältlichen Polyamids (Durethan^{®} B40F) werden in einem Wendelmischer bei 80°C mit einer Lösung aus 468 ppm PEG 400 und 33 ppm Luviskol K90 versetzt und 2 h bei 80°C gemischt.

In einem Extruder mit Breitschlitzdüse bei einem Massedruck von 36 bar, einer Massetemperatur von 257°C und einer Drehzahl von 30 Upm wird das Material zu einer Folie mit einer Breite von ca. 300 mm und einer Dicke von ca. 50 µm extrudiert. Die Chill-roll Temperatur beträgt 90°C.

### (Vergleichsbeispiel 8)

6 kg eines kommerziell erhältlichen Polyamids (Durethan^{®} B40F) werden in einem Wendelmischer bei 80°C mit einer Lösung aus 935 ppm PEG 400 und 123 ppm Luviskol K90 versetzt und 2 h bei 80°C gemischt.

Die Extrusionsbedingungen sind analog Beispiel 1 gewählt.

### (Vergleichsbeispiel 9)

6 kg eines kommerziell erhältlichen Polyamids (Durethan^{®} B40F) werden in einem Wendelmischer bei 80°C mit einer Lösung aus 877 ppm PEG 400, 150 ppm Talkum und 65 ppm Luviskol K90 versetzt und 2 h bei 80°C gemischt.

Die Extrusionsbedingungen sind analog Beispiel 1 gewählt.

### (Vergleichsbeispiel 10)

6 kg eines kommerziell erhältlichen Polyamids (Durethan^{®} B40F) werden in einem Wendelmischer bei 80°C mit einer Lösung aus 826 ppm PEG 400 und 173 ppm Luviskol K90 versetzt und 2 h bei 80°C gemischt.

Die Extrusionsbedingungen sind analog Beispiel 1 gewählt.

### (Vergleichsbeispiel 11)

6 kg eines kommerziell erhältlichen Polyamids (Durethan^{®} B40F) werden in einem Wendelmischer bei 80°C mit einer Lösung aus 244 ppm PEG 400 und 122 ppm Luviskol K30 versetzt und 2 h bei 80°C gemischt.

Die Extrusionsbedingungen sind analog Beispiel 1 gewählt.

### (Vergleichsbeispiel 12)

6 kg eines kommerziell erhältlichen Polyamids (Durethan^{®} B40F) werden in einem Wendelmischer bei 80°C mit einer Lösung aus 205 ppm PEG 400 und 123 ppm Luviskol K25 versetzt und 2 h bei 80°C gemischt.

Die Extrusionsbedingungen sind analog Beispiel 1 gewählt.

### (Vergleichsbeispiel 13)

6 kg eines kommerziell erhältlichen Polyamids (Durethan^{®} B40F) werden in einem Wendelmischer bei 80°C mit einer Lösung aus 667 ppm PEG 400 und 333 ppm Luviskol K30 versetzt und 2 h bei 80°C gemischt.

Die Extrusionsbedingungen sind analog Beispiel 1 gewählt.

### Vergleichsbeispiel 14)

6 kg eines kommerziell erhältlichen Polyamids (Durethan^{®} B40F) werden in einem Wendelmischer bei 80°C mit einer Lösung aus 625 ppm PEG 400 und 375 ppm Luviskol K25 versetzt und 2 h bei 80°C gemischt.

Die Extrusionsbedingungen sind analog Beispiel 1 gewählt,

### Beispiel 9

Unverstärktes PA 6 (Durethan B30F, Handelsprodukt der Bayer AG) wurde mit den in Tab. 3 angegebenen Additiven (mit Luviskol K90-Zusatz) und Glasfasern durch Compoundierung auf einem Zweiwellenextruder (ZSK 32 der Fa. Werner und Pfleiderer) bei einer Massetemperaturen von ca. 270°C zu einer thermoplastischen Formmasse verarbeitet. Die Schmelze wurde anschließend durch ein Wasserbad abgesponnen und granuliert. Das erhaltene Granulat wurde auf einer Spritzgießmaschine des Typs Arburg 320-210-500 unter formmasseüblichen Bedingungen (Massetemperaturen von 280°C, Werkzeugtemperaturen 80°C) für Lasertransmissionsmessungen zu Flachstäben (125 mm x 12,5 mm x 1,5 mm) verarbeitet.

### Vergleichsbeispiel 1

6 kg eines kommerziell erhältlichen Polyamids (Durethan^{®} B40 F werden analog Beispiel 1 thermisch belastet und wie in Beispiel 1 verarbeitet.

### Vergleichsbeispiel 2

6 kg eines kommerziell erhältlichen Polyamids (Durethan^{®} B40 FA werden analog Beispiel 1 thermisch belastet und wie in Beispiel 1 verarbeitet.

### Vergleichsbeispiel 3

6 kg eines kommerziell erhältlichen Polyamids (Durethan^{®} B40 FKA werden analog Beispiel 1 thermisch belastet und wie in Beispiel 1 verarbeitet.

### Vergleichsbeispiel 4

6 kg eines kommerziell erhältlichen Polyamids (Durethan^{®} B40F) werden in einem Wendelmischer bei ca. 140°C mit 173 ppm Luviskol K90 versetzt und 2 h bei 140°C gemischt.

### Vergleichsbeispiel 5

6 kg eines kommerziell erhältlichen Polyamids (Durethan^{®} B40F) werden in einem Wendelmischer analog Vergleichsbeispiel 4 thermisch belastet.

### Vergleichsbeispiel 6

Unverstärktes PA 6 (Durethan B30F, Handelsprodukt der Bayer AG) wurde mit den in Tab. 3 angegebenen Additiven (ohne Zusatz von Luviskol) und Glasfasern durch Compoundierung auf einem Zweiwellenextruder (ZSK 32 der Fa. Werner und Pfleiderer) bei einer Massetemperaturen von ca. 270°C zu einer thermoplastischen Formmasse verarbeitet. Die Schmelze wurde anschließend durch ein Wasserbad abgesponnen und granuliert. Das erhaltene Granulat wurde auf einer Spritzgießmaschine des Typs Arburg 320-210-500 unter formmasseüblichen Bedingungen (Massetemperaturen von 280°C, Werkzeugtemperaturen 80°C) für Lasertransmissionsmessungen zu Prüfkörpern (Flachstäbe, 125 mm x 12,5 mm x 1,5 mm) verarbeitet.

Die Produkte aus den Vergleichsbeispielen 1,2 und 3 sowie Beispielen 1 bis 8 wurden bzgl. ihrer isothermen Kristallisationszeiten untersucht. Die Daten sind in den nachfolgenden Tabellen zusammengefasst.

**Tabelle 1: Isotherme Kristallisationszeiten bei 200°C**

| Versuch | PEG 400-Gehalt | Polyvinyl-pyrrolidon-Typ | Gehalt Polyvinyl-pyrrolidin | Isotherme Kristallisationszeit bei 200°C |
|---|---|---|---|---|
| | [ppm] | | [ppm] | [min] |
| Vergleichsbeispiel 1 | 0 | --- | 0 | 4,7 |
| Vergleichsbeispiel 2 | 0 | --- | 0 | 4,0 |
| Vergleichsbeispiel 3* | 0 | --- | 0 | 3,0 |
| Vergleichsbeispiel 4 | 400 | --- | 0 | 4,2 |
| Vergleichsbeispiel 7 | 468 | K90 | 33 | 5,2 |
| Vergleichsbeispiel 8 | 935 | K90 | 65 | 5,9 |
| Vergleichsbeispiel 9* | 877 | K90 | 123 | 3,7 |
| Vergleichsbeispiel 10 | 826 | K90 | 173 | 6,7 |
| Vergleichsbeispiel 11 | 244 | K30 | 122 | 5,8 |
| Vergleichsbeispiel 12 | 205 | K25 | 123 | 5,7 |
| Vergleichsbeispiel 13 | 665 | K30 | 333 | 5,8 |
| Vergleichsbeispiel 14 | 625 | K25 | 375 | 5,5 |

| | | | | |
|---|---|---|---|---|
| * enthaltend 150 ppm Talkum | | | | |

**Tabelle 2: Vergleich Folienindices**

| Versuch | PEG 400-Gehalt | Polyvinylpyrrolidon-Typ | Gehalt Polyvinylpyrrolidon | Folienindex |
|---|---|---|---|---|
| | [ppm] | | [ppm] | |
| Vergleichsbeispiel 4 | 0 | K90 | 174 | 9968 |
| Vergleichsbeispiel 5 | 0 | -- | 0 | 338 |
| Vergleichsbeispiel 10 | 826 | K90 | 173 | 84 |

**Tabelle 3: Zusammensetzung der Formmassen für Spritzgießverarbeitung / Laserdurchstrahlschweißen**

| | | **Bsp. 9** | **Bsp. 10** | **Vgl.-Bps. 15** | **Vgl.-Bsp. 16** | **Vgl.-Bsp. 17** | **Vgl. 6** |
|---|---|---|---|---|---|---|---|
| PA6, Additive¹⁾ | [%] | 69,948 | 69,3 | 68,8 | 68,7 | 67,8 | 70 |
| Glasfaser Bayer CS 7928 | [%] | 30 | 30 | 30 | 30 | 30 | 30 |
| Luviskol K90 | [%] | 0,052²⁾ | 0,7 | 1,2 | 1,7 | 2,2 | |

| | | | | | | | |
|---|---|---|---|---|---|---|---|
| 1) Additive in üblichen Mengen und konstanten Konzentrationen (0,01 - 0,5 %): Nukleierungsmittel (175 ppm Mikrotalkum), Entformungsmittel (0,16 % Montanesterwachs, Ethylenglykolbismontanoat) 2) Dosiert als 17,36 %ige Lösung in PEG 400 | | | | | | | |

Von den Zusammensetzungen entsprechend Vergleichsbeispiel 6 sowie Beispiel 9-12 wurden die Lasertfansmissionswerte im spritzfrischen Zustand und nach Temperung (Nachkristallisation 4h/120°C) bestimmt. Die Daten sind in den nachfolgenden Tabellen zusammengefasst.

**Tabelle 4: Ergebnisse der Transmissionsmessungen* an 1,5 mm dicken Prüfkörpern**

| **Wellenlänge [nm]** | **Prüfkörperdicke [mml]** | **Probencharakterisierung Vorbehandlung der Proben** | **Bsp. 9** | **Bsp**. **10** | **Vgl**.-**Bsp**. **15** | **Vgl.-Bsp. 16** | **Vgl.-Bsp**. 17 | **Vgl**. **6** |
|---|---|---|---|---|---|---|---|---|
| 810 | 1,5 | Keine, spritzfrisch | 59 | 60 | 61 | 61 | 62 | 56 |
| 1065 | 1,5 | Keine, spritzfrisch | 64 | 66 | 66 | 67 | 68 | 62 |
| 810 | 1,5 | Temperung 4h 120°C | 54 | 56 | 56 | 56 | 57 | 53 |
| 1065 | 1,5 | Temperung 4h 120°C | 60 | 62 | 62 | 63 | 64 | 59 |

| | | | | | | | | |
|---|---|---|---|---|---|---|---|---|
| *Gesamttransmission[%], Messgerät PE Lambda 900,0°/diffus, Ref. Luft T=100% | | | | | | | | |

Da es sich bei allen Proben um sehr stark streuendes Material handelt, wurde die Gesamttransmission als Summe aus direkter und diffuser Transmission ausgewertet.

Die Proben entsprechend den Vergleichsbeispielen weisen bei 1000 nm und im benachbarten Wellenlängenbereich deutlich niedrigere Transmission auf, während die erfindungsgemäß mit Luviskol additivierten Proben Bsp.1-4 eine signifikant höhere Transmission zeigen.

## Patentansprüche

1. Formmassen enthaltend eine Zusammensetzung aus
A) 95-99,994 Gew.-% Polyamid
und
B) 0,005-1 Gew.-% Vinylhomopolymere und/oder Copolymere aus Vinylmonomeren
und
C) 0,001-1 Gew.-% Lösungsmittel, wobei das Lösungsmittel ausgewählt ist aus Wasser, Alkohol, Keton, Eisessig, Chlorkohlenwasserstoff und Phenol,
sowie faserförmige Verstärkungsstoffe, wobei als solche neben Glasfasern, Aramidfasern, Mineralfasern und Whisker in Betracht kommen.

2. Formmassen gemäß Anspruch 1, **dadurch gekennzeichnet, dass** diese eine Zusammensetzung aus
99-99,965 Gew.-% A)
und
0,005-0,8 Gew.-% B)
und
0,03-0,4 Gew.-% C) enthalten.

3. Formmassen gemäß der Ansprüche 1 oder 2, **dadurch gekennzeichnet, dass** diese Additive und/oder Farbmittel enthalten.

4. Formmassen gemäß einem oder mehreren der vorangegangen Ansprüche, wobei als B) Poly-N-vinyllactam und/oder Poly-N-vinylpyrrolidon und/oder Copolymere bestehend aus Vinyllactam, und/oder Vinylpyrrolidon eingesetzt werden.

5. Formmassen gemäß einem oder mehreren der vorangegangen Ansprüche, wobei als A) Polyamid 6 eingesetzt wird.

6. Verfahren zur Herstellung von Formmassen gemäß einem oder mehreren der vorangegangen Ansprüche, **dadurch gekennzeichnet, dass** die Komponenten A), B), C) in beliebiger Reihenfolge vermischt werden

7. Verfahren gemäß Anspruch 6, wobei die Komponenten B) und C) zuerst miteinander vermischt und dann zur Komponente A) gegeben werden.

8. Verwendung von Formmassen gemäß der Ansprüche 1 bis 5 zur Herstellung von Formkörpern, Folien und Hohlpörpern.

9. Verwendung der Folien gemäß Anspruch 8 als Verpackungsmaterial.

10. Verwendung der Hohlkörper gemäß Anspruch 8 als Leitungen, und Tanks.

## Claims

1. Molding materials comprising a composition composed of
A) 95-99.994 wt.% polyamide
and
B) 0.005-1 wt.% vinyl homopolymers and/or copolymers composed of vinyl monomers
and
C) 0.001-1 wt.% solvent, wherein the solvent is selected from water, alcohol, ketone, glacial acetic acid, chlorinated hydrocarbon and phenol,
and also fibrous reinforcers, wherein not only glass fibres but also aramid fibers, mineral fibers and whiskers are contemplated as said reinforcers.

2. Molding materials according to Claim 1, **characterized in that** they comprise a composition composed of
95-99.965 wt.% A)
and
0.005-0.8 wt.% B)
and
0.03-0.4 wt.% C).

3. Molding materials according to Claim 1 or 2, **characterized in that** they comprise additives and/or colorants.

4. Molding materials according to one or more of the preceding claims, wherein B) is poly-N-vinyllactam and/or poly-N-vinylpyrrolidone and/or copolymers of vinyllactam and/or vinylpyrrolidone.

5. Molding materials according to one or more of the preceding claims, wherein A) is polyamide 6.

6. Process for producing molding materials according to one or more of the preceding claims, **characterized in that** components A), B), C) are mixed in any desired sequence.

7. Process according to Claim 6, wherein components B) and C) are initially mixed with one another and then added to component A).

8. Use of molding materials according to Claims 1 to 5 for producing molded articles, films and hollow articles.

9. Use of films according to Claim 8 as packaging material.

10. Use of hollow articles according to Claim 8 as conduits and tanks.

## Revendications

1. Masses à mouler contenant une composition constituée de :
A) 95 à 99,994 % en poids de polyamide,
B) 0,005 à 1 % en poids d'homopolymère de vinyle et/ou de copolymère de monomères vinyliques, et
C) 0,001 à 1 % en poids de solvant, le solvant étant choisi parmi l'eau, un alcool, une cétone, l'acide acétique glacial, un hydrocarbure chloré et le phénol, ainsi que de fibres de renfort, où on prendra en considération comme fibres de renfort, outre des fibres de verre, des fibres d'aramide, des fibres minérales et des trichites.

2. Masses à mouler selon la revendication 1, **caractérisée en ce qu'**elles contiennent une composition constituée de :
99 à 99,965 % en poids de A)
0,005 à 08 % en poids de B), et
0,03 à 0,4 % en poids de C).

3. Masses à mouler selon la revendication 1 ou 2, **caractérisées en ce qu'**elles contiennent des additifs et/ou des colorants.

4. Masses à mouler selon une ou plusieurs des revendications précédentes, où on utilise comme B) un poly-N-vinyllactame et/ou une poly-N-vinylpyrrolidone et/ou des copolymères constitués de vinyllactame et/ou de vinylpyrrolidone.

5. Masses à mouler selon une ou plusieurs des revendications précédentes, où on utilise comme A) du polyamide 6.

6. Procédé de fabrication de masses à mouler selon une ou plusieurs des revendications précédentes, **caractérisé en ce qu'**on mélange les composants A), B) et C) dans n'importe quel ordre.

7. Procédé selon la revendication 6, où on commence par mélanger les composants B) et C), puis on ajoute le composant A).

8. Utilisation de formes à mouler selon les revendications 1 à 5 pour la fabrication de corps moulés, de feuilles et de corps creux.

9. Utilisation des feuilles selon la revendication 8 comme matériau d'emballage.

10. Utilisation des corps creux selon la revendication 8 comme tuyaux et réservoirs.
